# EUROPÄISCHE PATENTSCHRIFT

(11) **EP 0 984 736 B1**
(45) Veröffentlichungstag und Bekanntmachung des Hinweises auf die Patenterteilung: **10.09.2003**
(21) Anmeldenummer: 98928126.6
(22) Anmeldetag: 02.04.1998
(51) Int. Cl.: A61C 8/00

(54) **KONUSFÖRMIGES IMPLANTAT**
CONICAL IMPLANT
IMPLANT CONIQUE

(30) Priorität: 29.04.1997 DE 19718176
(43) Veröffentlichungstag der Anmeldung: 15.03.2000
(73) Patentinhaber: IMZ Fertigungs- und Vertriebsgesellschaft für dentale Technologie mbH, 70794 Filderstadt (DE)
(72) Erfinder: KIRSCH, Axel, D-70184 Stuttgart (DE); SCHERBERGER, Rolf, D-75223 Niefern-Öschelbrunn (DE)
(74) Vertreter: Goddar, Heinz J., Dr.
(86) Internationale Anmeldenummer: DE9800949
(87) Internationale Veröffentlichungsnummer: WO98048727

(56) Entgegenhaltungen:
- EP-A- 0 373 734
- DE-C- 19 534 979
- GB-A- 2 199 626
- US-A- 5 205 745

## Beschreibung

Die Erfindung betrifft ein enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, einer an den koronalen Stirnrand des Grundkörpers verdrehgesichert ansetzbaren Distanzhülse, die einen zervikalen Zentrierbund aufweist, der in eine am koronalen Ende des Grundkörpers

vorgesehene hohlzylindrische Ringausnehmung einsetzbar ist, eine in koronaler Richtung an den Zentrierbund anschließende, auf den koronalen Stirnrand des Grundkörpers aufsetzbare Schulter aufweist und mit einer zu ihrem koronalen Ende offenen Bohrung zur Aufnahme des Implantatpfostens versehen ist, wobei eine Verbindungseinrichtung zum verdrehgesicherten Verbinden der Distanzhülse mit dem Grundkörper dadurch gebilde ist, daß die hohlzylindrische Ringausnehmung des Grundkörpers mindestens ein in Umfangsrichtung wirksames Grundkörper-Formschlußelement und der Zentrierbund der Distanzhülse mindestens ein zu dem/den Grundkörper-Formschlußelement(en) komplementäres Distanzhülsen-Formschlußelement aufweist, einem in die Blindbohrung des Grundkörpers direkt oder indirekt einsetzbaren und die Distanzhülse zumindest teilweise durchsetzenden Implantatpfosten und einem Befestigungskopf für den Zahnersatz, wobei das die Grundkörper-Formschlußelement(e) an der Innenwandung der Ringausnehmung in einem Formschlußbereich derselben unmittelbar im Anschluß an den Stirnrand des Grundkörpers vorgesehen ist/sind; wobei (eine) der Längsmittelachse der Ringausnehmung nächstliegende(n) Führungsfläche(n) des Formschlußbereiches auf einer Zylinderfläche liegt/liegen, deren Durchmesser demjenigen eines sich zervikal an den Formschlußbereich anschließenden Führungsbereiches der Ringausnehmung mit im wesentlichen glatter Umfangswandung entspricht; wobei an den Führungsbereich der Ringausnehmung zervikal ein Zentrierbereich der Ringausnehmung mit gegenüber dem Führungsbereich verringertem Durchmesser anschließt; wobei das/die Distanzhülsen-Formschlußelement(e) zervikal im Anschluß an die Schulter der Distanzhülse an der zylindrischen Außenwandung des Zentrierbundes in einem Formschlußabschnitt desselben vorgesehen ist/sind; wobei die radial am nächsten zur Längsmittelachse des Zentrierbundes liegende(n) Umfangsfläche(n) des Formschlußabschnittes auf einer Zylinderfläche liegen, deren Durchmesser im wesentlichen dem Innendurchmesser des Führungsbereiches des Grundkörpers entspricht; wobei an den Formschlußabschnitt zervikal ein zylindrischer Führungsabschnitt anschließt, dessen Außendurchmesser im wesentlichen dem Innendurchmesser des Führungsbereiches des Grundkörpers entspricht; und wobei an den Führungsabschnitt zervikal ein zylinderförmiger Zentrierabschnitt anschließt, dessen Außendurchmesser im wesentlichen mit dem Innendurchmesser des Zentrierbereiches des Grundkörpers übereinstimmt. Ein derartiges Implantat ist in DE 195 34 979 C1 beschrieben, auf welche hinsichtlich weiterer Einzelheiten dieses gattungsgemäßen Implantats verwiesen wird.

Bei den bekannten Implantaten weist der Grundkörper, der entweder glatt oder mit einem Außenschraubgewinde versehen sein kann, über seiner Länge einen im wesentlichen konstanten Querschnitt auf. Diese Geometrie hat sich zwar allgemein bewährt, führt jedoch bei Implantaten im Seitenzahnbereich wegen der dort auftretenden grö-ßeren auf das Implantat wirkenden Kräfte dazu, daß für eine stabile Verankerung des Implantataufbaus ein vergleichsweise großer Durchmesser des Grundkörpers erforderlich ist. Dies erfordert wiederum eine größere Entnahme von Knochengewebe zum Einsetzen des Grundkörpers in den Knochen.

Es ist die Aufgabe der Erfindung, ein Implantat der eingangs beschriebenen Art zu schaffen, bei dem eine stabile Verankerung des Implantataufbaus mit einer geringeren Beschädigung des Knochengewebes des Patienten möglich ist.

Diese Aufgabe wird erfindungsgemäß durch ein Implantat gemäß des Anspruchs 1 gelöst.

Dabei können der erste Abschnitt im wesentlichen zylinderförmig und der zweite Abschnitt im wesentlichen konusförmig sein. Der erste Abschnitt kann Aussparungen jeglicher Geometrie, beispielsweise die üblichen Lakunen, bei einem ansonsten im wesentlichen konstanten Außendurchmesser aufweisen.

Der Außendurchmesser des Grundkörpers kann an seinem zervikalen Ende 65 % bis 85 %, vorzugsweise 70 % bis 75 % des Außendurchmessers an seinem koronalen Ende betragen.

Der Abstand zwischen dem koronalen Ende des Grundkörpers und dem koronalen Ende des ersten Abschnitts kann gemäß einer bevorzugten Ausführungsform in einem Bereich zwischen 4 mm bis 7 mm, vorzugsweise bei ungefähr 6,5 mm liegen.

Die Erfindung kann weiterhin vorsehen, daß der Konuswinkel α des zweiten Abschnitts in einem Bereich von 25° bis 50°, vorzugsweise in einem Bereich von 30° bi 45° liegt.

Der erste, zweite und ggf. dritte Abschnitt können jeweils unterschiedlich bearbeitet und/oder beschichtet sein, wobei insbesondere ihre Oberfläche jeweils unterschiedlich ausgebildet sein kann. Beispielsweise können ein oder zwei der Abschnitte eine glatte Oberfläche aufweisen und der oder die verbleibenden Abschnitte eine rauhe Oberfläche. Der dritte Abschnitt weist, wenn er mit einem Außengewinde ausgeführt ist, vorzugsweise eine mit einer Ätztechnik erzeugte rauhe Oberfläche auf, während der erste und zweite Abschnitt vorzugsweise mit einer Titanplasmabeschichtung versehen sind.

Weiterhin kann vorgesehen sein, daß die Blindbohrung in dem Grundkörper mehrere koaxiale, im wesentlichen zylinderförmige Abschnitte aufweist, deren Innendurchmesser von dem koronalen Ende zu dem zervikalen Ende hin abnimmt.

Erfindungsgemäß kann die Blindbohrung in dem Grundkörper in dem Bereich des dritten Abschnitts einen größeren Innendurchmesser als in dem ersten Abschnitt aufweisen.

Weiterhin kann der Innendurchmesser der Blindbohrung in dem vorzugsweise konusartigen zweiten Abschnitt zwischen dem Innendurchmesser der Blindbohrung in dem dritten Abschnitt des Grundkörpers und demjenigen in dem ersten Abschnitt des Grundkörpers liegen.

Die Erfindung sieht weiterhin Formschlußelemente zur Sicherung eines an dem Grundkörper befestigten Aufbaus gegen Verdrehung bezüglich des Grundkörpers vor, welche insbesondere unmittelbar im Anschluß an die koronale Stirnwand des Grundkörpers vorgesehen sein können.

Die Erfindung beruht auf der Erkenntnis, daß zum sicheren Verankern eines Implantataufbaus auch bei Auftreten größerer Kräfte, wie sie im Seitenzahnbereich auftreten, ein vergleichsweise großer Durchmesser des Grundkörpers nur im Bereich der harten Corticalis erforderlich ist, während im Bereich der Spongiosa eine geringere Querschnittsfläche ausreicht. Dementsprechend entspricht die Länge des Abschnitts des Grundkörpers mit einem größeren Außendurchmesser vorteilhafterweise in etwa der Dicke der Corticalis. Zur besseren Verankerung des Grundkörpers in der Corticalis dient ein vorzugsweise selbstschneidendes Außengewinde in dem verdickten dritten Abschnitt.

Weitere Merkmale und Vorteile der Erfindung ergeben sich aus der folgenden Beschreibung von Ausführungsbeispielen der Erfindung mit Bezug auf die beigefügten Zeichnungen.
- Fig. 1: zeigt eine Seitenansicht einer ersten Ausführungsform eines Grundkörpers des erfindungsgemäßen Implantats.
- Fig. 2: zeigt einen Längsschnitt des in Fig. 1 dargestellten Grundkörpers.
- Fig. 3: zeigt eine Vorderansicht eines zweiten Ausführungs beispiels des erfindungsgemäßen Grundkörpers.
- Fig. 4: zeigt einen Längsschnitt des Grundkörpers der Ausführungsform der Fig. 3.

In der nachfolgenden Beschreibung sind gleiche und gleichwirkende Bestandteile mit denselben Bezugszeichen versehen.

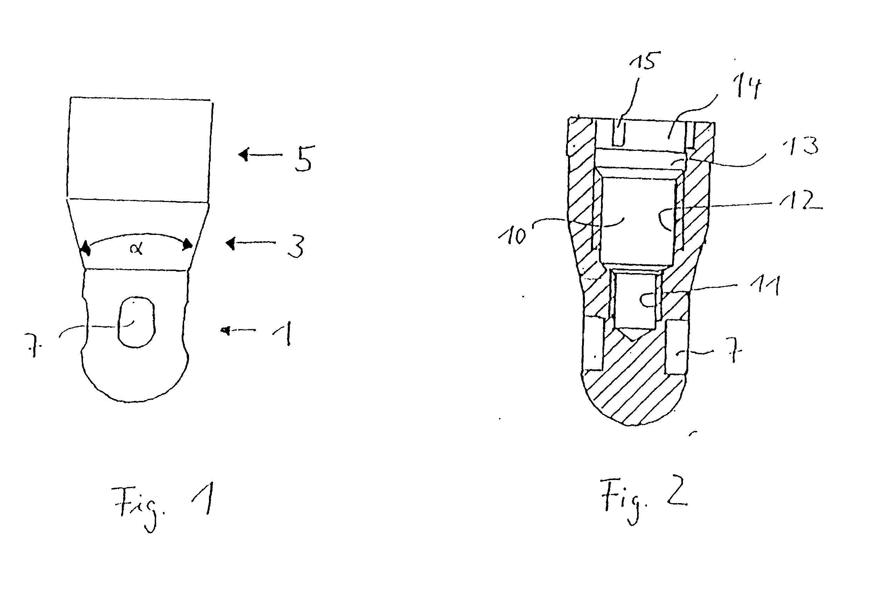

Bezugnehmend auf Fig. 1 weist der Grundkörper des Implantats in Abfolge von dem zervikalen Ende zu dem koronalen Ende drei Hauptabschnitte auf, nämlich einen ersten zylinderförmigen Abschnitt 1, einen konusartigen Übergangsabschnitt 3 sowie einen zweiten zylinderartigen Abschnitt 5, wobei der Außendurchmesser des Abschnitts 5 größer als derjenige des Abschnitts 1 ist und der Außendurchmesser des Abschnitts 2 sich kontinuierlich, beispielsweise konisch oder entlang einer gekrümmten Kurve, die z. B. hyperbolisch oder kreisbogenförmig sein kann, von dem größeren Durchmesser des Abschnitts 5 zu dem kleineren Durchmesser des Abschnitts 1 verkleinert. In dem ersten zylinderartigen Abschnitt 1 sind in bekannter Weise ovalförmige Vertiefungen 7, sogenannte Lakunen, ausgebildet, in die zur besseren Verankerung beim Einheilen Knochenmaterial einwachsen kann. Die Länge zwischen dem koronalen Ende des Abschnitts 5 und dem zervikalen Ende des Abschnitts 3 beträgt bei diesem Ausführungsbeispiel in etwa 6,5 mm, während die Länge des Abschnitts 1 je nach Anwendung variieren kann und beispielsweise zwischen 5 mm und 11 mm liegen kann und typischerweise 1/2 bis 2/3 der Gesamtlänge des Grundkörpers beträgt. Bei dem dargestellten Ausführungsbeispiel beträgt der Außendurchmesser des Abschnitts 1 in etwa 5,4 mm und der Außendurchmesser des Abschnitts 5 in etwa 4 mm, wobei der Konuswinkel α des Abschnitts 3 ungefähr 30° beträgt.

Wie aus der Schnittansicht der Fig. 2 hervorgeht, weist der in Fig. 1 dargestellte Grundkörper eine Blindbchrung 10 zur Aufnahme eines Implantatpfostens und einer Distanzhülse auf, wie sie in dem deutschen Patent 195 34 979 C1 beschrieben sind, auf die hinsichtlich weiterer Einzelheiten verwiesen wird. In Übereinstimmung mit der Lehre dieser Druckschrift weist die Blindbohrung ein erstes und zweites Innengewinde 11 bzw. 12 auf, wobei das Innengewinde 11 einen kleineren Durchmesser als das Innengewinde 12 besitzt und im wesentlichen in dem Abschnitt 1 liegt. An das Innengewinde 12 schließt sich ein Führungsbereich 13 an, der in dem Abschnitt 5 liegt und dessen Innendurchmesser größer als der Innendurchmesser der Gewinde 11 und 12 ist. An den Führungsabschnitt 13 schließt sich in Richtung zu dem koronalen Ende hin ein Formschlußabschnitt 14 an, welcher mehrere Formschlußausnehmungen 15 zum Zusammenwirken mit komplementären Formschlußelementen einer Distanzhülse aufweist, die in den in Fig. 1 und 2 dargestellten Grundkörper eingesetzt werden und durch die hindurch ein Implantatpfosten in den Grundkörper eingeführt und mittels des Innengewindes 11 verankert werden kann. vorzugsweise sind drei oder vier halbkreisförmige oder viereckige Ausnehmungen 15 vorhanden. Hinsichtlich weiterer Einzelheiten hinsichtlich der Formschlußverbindung wird auf die DE 195 34 979 C1 verwiesen.

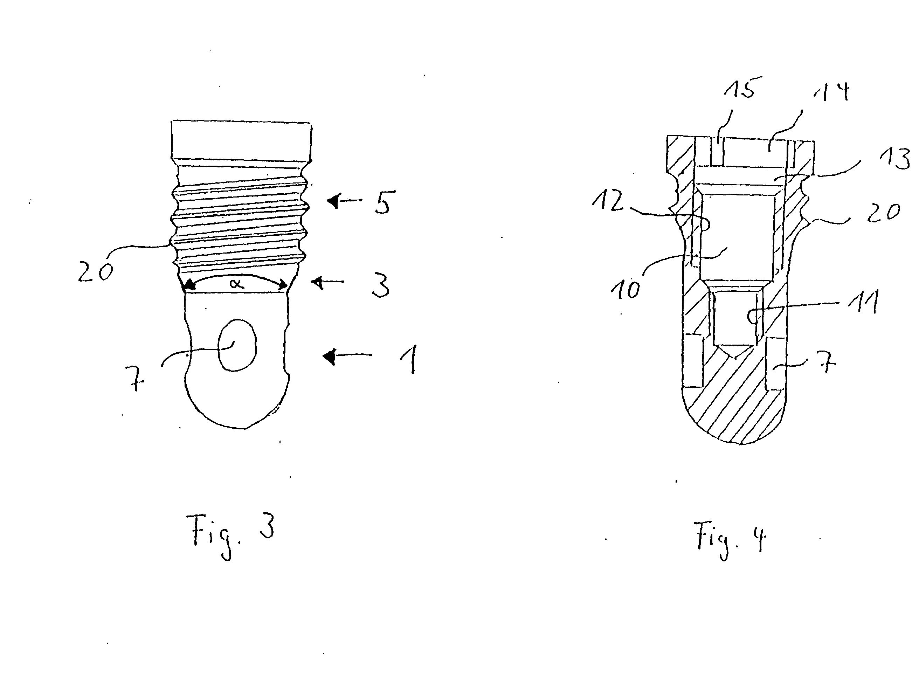

Die in den Fig. 3 und 4 dargestellte zweite Ausführungsform des Grundkörpers des erfindungsgemäßen Implantats entspricht im wesentlichen dem in Fig. 1 und 2 dargestellten Grundkörper. Im Unterschied zu der Ausführungsform der Fig. 1 und 2 ist jedoch hier der erste zylinderförmige Abschnitt 5 mit einem selbstschneidenden Außengewinde 20 versehen, das unterhalb des koronalen Endes in etwa auf der Höhe des Führungsabschnitts 13 einsetzt und sich bis zum Beginn des konusartigen Abschnitts 3 erstreckt. Der Nenndurchmesser des Außengewindes 20 entspricht dabei dem Außendurchmesser des gewindefreien Teils des Abschnitts 5 an dessen koronalem Ende, wobei die Gewindetiefe ungefähr 1/6 dieses Außendurchmessers beträgt, also bei einem Außendurchmesser von 5,4 mm etwa 0,9 mm. Der konische Übergangsbereich ist hier etwas kürzer ausgebildet. Der Konuswinkel α liegt, bei einem Übergang von einem Außendurchmesser bzw. Nenndurchmesser des Gewindes 20 von 5,4 mm auf 4 mm, bei etwa 45°.

## Patentansprüche

1. Enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung (10) aufweist, einer an den koronalen Stirnrand des Grundkörpers verdrehgesichert ansetzbaren Distanzhülse, die einen zervikalen Zentrierbund aufweist, der in eine am koronalen Ende des Grundkörpers vorgesehene hohlzylindrische Ringausnehmung einsetzbar ist, eine in koronaler Richtung an den Zentrierbund anschließende, auf den koronalen Stirnrand des Grundkörpers aufsetzbare Schulter aufweist und mit einer zu ihrem koronalen Ende offenen Bohrung zur Aufnahme des Implantatpfostens versehen ist, wobei eine Verbindungseinrichtung zum verdrehgesicherten Verbinden der Distanzhülse mit dem Grundkörper dadurch gebildet ist, daß die hohlzylindrische Ringausnehmung des Grundkörpers mindestens ein in Umfangsrichtung wirksames Grundkörper-Formschlußelement und der Zentrierbund der Distanzhülse mindestens ein zu dem/den Grundkörper-Formschlußelement(en) komplementäres Distanzhülsen-Formschlußelement aufweist, einem in die Blindbohrung des Grundkörpers direkt oder indirekt einsetzbaren und die Distanzhülse zumindest teilweise durchsetzenden Implantatpfosten und einem Befestigungskopf für den Zahnersatz, wobei das/die Grundkörper-Formschlußelement(e) an der Innenwandung der Ringausnehmung in einem Formschlußbereich (14) derselben unmittelbar im Anschluß an den Stirnrand des Grundkörpers vorgesehen ist/sind; wobei (eine) der Längsmittelachse der Ringausnehmung nächstliegende(n) Führungsflächen) des Formschlußbereiches (14) auf einer Zylinderfläche liegt/liegen, deren Durchmesser demjenigen eines sich zervikal an den Formschlußbereich anschließenden Führungsbereiches (13) der Ringausnehmung mit im wesentlichen glatter Umfangswandung entspricht; wobei an den Führungsbereich der Ringausnehmung zervikal ein Zentrierbereich der Ringausnehmung mit gegenüber dem Führungsbereich verringertem Durchmesser anschließt; wobei das/die Distanzhülsen-Formschlußelement(e) zervikal im Anschluß an die Schulter der Distanzhülse an der zylindrischen Außenwandung des Zentrierbundes in einem Formschlußabschnitt desselben vorgesehen ist/sind; wobei die radial am nächsten zur Längsmittelachse des Zentrierbundes liegende(n) Umfangsfläche(n) des Formschlußabschnittes auf einer Zylinderfläche liegen, deren Durchmesser im wesentlichen dem Innendurchmesser des Führungsbereiches (13) des Grundkörpers entspricht; wobei an den Formschlußabschnitt zervikal ein zylindrischer Führungsabschnitt anschließt, dessen Außendurchmesser im wesentlichen dem Innendurchmesser des Führungsbereiches des Grundkörpers entspricht; und wobei an den Führungsabschnitt zervikal ein zylinderförmiger Zentrierabschnitt anschließt, dessen Außendurchmesser im wesentlichen mit dem Innendurchmesser des Zentrierbereiches des Grundkörpers übereinstimmt, **dadurch gekennzeichnet, daß** der Grundkörper, bezogen auf seine Längsrichtung, einen ersten Abschnitt (1), der das zervikale Ende des Grundkörpers bildet, sowie einen zweiten, an den ersten Abschnitt an dessen koronalem Ende anschließenden Abschnitt (3) aufweist, in dem sich der Außendurchmesser in Richtung zu dem koronalen Ende des Grundkörpers hin vergrößert, wobei der Außendurchmesser des ersten Abschnitts (1) sich bezüglich der Längsrichtung des Grundkörpers nicht oder weniger stark als in dem zweiten Abschnitt (3) ändert und der erste Abschnitt (1) frei von einem Gewinde ist, und daß ein dritter, im wesentlichen zylinderförmigen Abschnitt (5) an den zweiten Abschnitt (3) in der Richtung zu dem koronalen Ende hin anschließt, wobei der Außendurchmesser des ersten Abschnitts (1) über seiner gesamten Länge kleiner als der Außendurchmesser des dritten Abschnitts (5) ist und daß der dritte, im wesentlichen zylinderförmige Abschnitt (5) des Grundkörpers an seiner Außenseite mit einem Außengewinde versehen ist.

2. Implantat nach Anspruch 1, **dadurch gekennzeichnet, daß** der erste Abschnitt (1) im wesentlichen zylinderförmig und der zweite Abschnitt (3) im wesentlichen konusförmig ist.

3. Implantat nach einem der Ansprüche 1 bis 2, **dadurch gekennzeichnet, daß** der Außendurchmesser des Grundkörpers an seinem zervikalen Ende 65 % bis 85 % des Außendurchmessers an seinem koronalen Ende beträgt.

4. Implantat nach einem der Ansprüche 1 bis 3, **dadurch gekennzeichnet, daß** der Abstand zwischen dem koronalen Ende des Grundkörpers und dem koronalen Ende des ersten Abschnitts (1) in einem Bereich zwischen 4 mm und 7 mm liegt.

5. Implantat nach einem der Ansprüche 2 bis 4, **dadurch gekennzeichnet, daß** der Konuswinkel (α) des zweiten Abschnitts (3) in einem Bereich von 25° bis 50° liegt.

6. Implantat nach einem der Ansprüche 1 bis 5, **dadurch gekennzeichnet, daß** die Blindbohrung (10) in dem Grundkörper in dem Bereich des dritten Abschnitts (5) einen größeren Innendurchmesser als in dem ersten Abschnitt (1) aufweist.

7. Implantat nach Anspruch 6, **dadurch gekennzeichnet, daß** der Innendurchmesser der Blindbohrung (10) in dem zweiten Abschnitt (3) zwischen dem Innendurchmesser der Blindbohrung in dem dritten Abschnitt (5) des Grundkörpers und demjenigen des ersten Abschnitts (1) des Grundkörpers liegt.

## Claims

1. An endo-osseous single tooth implant for a stationary tooth replacement, comprising a substantially cylindrical base member insertable into a bore formed in the jawbone and having a blind bore (10) opening towards its coronal end, a spacer sleeve non-rotatably attachable to the coronal end edge of the base member and having a cervical centring collar which is insertable into a hollow cylindrical annular recess provided at the coronal end of the base member, has a shoulder adjoining the centring collar in the coronal direction and mountable on the coronal end edge of the base member and is formed with a bore opening towards its coronal end for receiving the implant post, wherein a connecting device for non-rotatably connecting the spacer sleeve to the base member is formed in that the hollow cylindrical annular recess in the base member comprises at least one base-member positive engagement element operating in the peripheral direction and the spacer-sleeve centring collar comprises at least one spacer-sleeve positive engagement element complementary with the base-member positive engagement element or elements, the implant also comprising a post directly or indirectly insertable into the blind bore in the base member and extending at least partly through the spacer sleeve, also comprising a fastening head for the tooth replacement, wherein the base-member positive engagement element or elements are provided on the inner wall of the annular recess in a positive-engagement region (14) thereof immediately adjoining the end edge of the base member; wherein one or more guide surfaces of the positive engagement region (14) closest to the longitudinal central axis of the annular recess lie on a cylindrical surface equal in diameter to a guide region (13) of the annular recess having a substantially flat peripheral wall and cervically adjoining the positive-engagement region; wherein a central region of the annular recess having a smaller diameter than the guide region of the annular recess cervically adjoins the said guide region; wherein the one or more spacer-sleeve positive engagement elements are provided in a positive-engagement portion cervically adjoining the shoulder of the spacer sleeve on the cylindrical outer wall of the centring collar; wherein the one or more peripheral surfaces of the positive engagement portion lying nearest the longitudinal central axis of the centring collar are on a cylindrical surface substantially equal in outside diameter to the inside diameter of the guide region (13) of the base member; wherein a cylindrical guide portion substantially equal in diameter to the inside diameter of the guide region of the base member cervically adjoins the positive engagement portion and wherein a cylindrical centring portion having an outside diameter substantially equal to the inside diameter of the centring region of the base member cervically adjoins the guide portion, **characterised in that** the base member, relative to its longitudinal direction, has a first portion (1) constituting the cervical end of the base member, a second portion (3) adjoining the coronal end of the first portion and having an outside diameter which increases towards the coronal end of the base member, the outside diameter of the first portion (1) relative to the longitudinal direction of the base member altering, if at all, less than in the second portion (3) and the first portion (1) is free from a screwthread, and a third substantially cylindrical portion (5) adjoins the second portion (3) in the direction towards the coronal end, wherein the outside diameter of the first portion (1) over its entire length is less than the outside diameter of the third portion (5) and the third substantially cylindrical portion (5) of the base member is screwthreaded on the outside.

2. An implant according to claim 1, **characterised in that** the first portion (1) is substantially cylindrical and the second portion (3) is substantially conical.

3. An implant according to claim 1 or 2, **characterised in that** the outside diameter of the base member at its cervical end is 65% to 85% of the outside diameter at its coronal end.

4. An implant according to any of claims 1 to 3, **characterised in that** the distance between the coronal end of the base member and the coronal end of the first portion (1) is in a range between 4 mm and 7 mm.

5. An implant according to any of claims 2 to 4, **characterised in that** the cone angle (α) of the second portion (3) is in a range from 25° to 50°.

6. An implant according to any of claims 1 to 5, **characterised in that** the blind bore (10) in the base member has a greater inside diameter in the region of the third portion (5) than in the first portion (1).

7. An implant according to claim 6, **characterised in that** the inside diameter of the blind bore (10) in the second portion (3) is between the inside diameter of the blind bore in the third portion (5) of the base member and that of the first portion (1) of the base member.

## Revendications

1. Implant endo-osseux de dent unitaire pour une prothèse dentaire fixe, comprenant un corps de base sensiblement cylindrique qui est insérable dans un trou réalisé dans un os maxillaire et qui est pourvu d'un trou borgne ouvert à son extrémité coronaire, un manchon d'écartement qui peut être rapporté sans possibilité de rotation sur le bord frontal coronaire du corps de base et qui comporte une collerette de centrage cervicale, laquelle est insérable dans un évidement annulaire cylindrique creux prévu à l'extrémité coronaire du corps de base, un épaulement pouvant être raccordé à la collerette de centrage dans la direction coronaire et posé sur le bord frontal coronaire du corps de base, et comprenant un trou ouvert vers son extrémité coronaire pour recevoir un pilier d'implant, un dispositif de liaison pour la liaison sans possibilité de rotation du manchon d'écartement au corps de base étant formé par le fait que l'évidement annulaire cylindrique creux du corps de base comporte au moins un élément de liaison par conjugaison de formes de corps de base agissant dans la direction circonférentielle et que la collerette de centrage du manchon d'écartement comporte au moins un élément de liaison par conjugaison de formes de manchon d'écartement complémentaire du ou des élément(s) de liaison par conjugaison de formes de corps de base, un pilier d'implant insérable directement ou indirectement dans le trou borgne du corps de base et traversant au moins partiellement le manchon d'écartement, et une tête de fixation pour la prothèse dentaire, le ou les éléments de liaison par conjugaison de formes de corps de base étant disposé(s) sur la paroi intérieure de l'évidement annulaire dans une zone de liaison par conjugaison de formes (14) de celle-ci, immédiatement à la suite du bord frontal du corps de base ; une ou des surface(s) de guidage de la zone de liaison par conjugaison de formes (14) la ou les plus proches de l'axe longitudinal médian de l'évidement annulaire se trouvant sur une surface cylindrique dont le diamètre correspond à celui d'une zone de guidage (13) de l'évidement annulaire qui est reliée côté cervical à la zone de liaison par conjugaison de formes et qui comporte une paroi périphérique sensiblement lisse ; une zone de centrage de l'évidement annulaire avec un diamètre réduit par rapport à la zone de guidage étant reliée côté cervical à la zone de guidage de l'évidement annulaire ; le ou les élément(s) de liaison par conjugaison de formes de manchon d'écartement étant disposé(s) côté cervical à la suite de l'épaulement du manchon d'écartement sur la paroi extérieure cylindrique de la collerette de centrage dans une portion de liaison par conjugaison de formes de celle-ci ; la ou les surface(s) périphérique(s) de la portion de liaison par conjugaison de formes la ou les plus proches radialement de l'axe longitudinal médian de la collerette de centrage se trouvant sur une surface cylindrique dont le diamètre correspond sensiblement au diamètre intérieur de la zone de guidage (13) du corps de base ; à la portion de liaison par conjugaison de formes se raccordant, côté cervical, une portion de guidage cylindrique dont le diamètre extérieur correspond sensiblement au diamètre intérieur de la zone de guidage du corps de base ; et à la portion de guidage se raccordant, côté cervical, une portion de centrage cylindrique dont le diamètre extérieur coïncide sensiblement avec le diamètre intérieur de la zone de centrage du corps de base, **caractérisé en ce que** le corps de base, dans le sens de sa direction longitudinale, comporte une première portion (1) qui forme l'extrémité cervicale du corps de base ainsi qu'une deuxième portion (3) qui se raccorde à la première portion au niveau de l'extrémité coronaire de celle-ci et dans laquelle le diamètre extérieur croît en direction de l'extrémité coronaire du corps de base, le diamètre extérieur de la première portion (1) n'augmentant pas, par rapport à la direction longitudinale, ou augmentant moins fortement que dans la deuxième portion (3), et la première portion (1) étant dépourvue de filetage, et **en ce qu'**une troisième portion sensiblement cylindrique (5) se raccorde à la deuxième portion (3) en direction de l'extrémité coronaire, le diamètre extérieur de la première portion (1) étant inférieur, sur toute sa longueur, au diamètre extérieur de la troisième portion (5), et **en ce que** la troisième portion sensiblement cylindrique (5) du corps de base est pourvue d'un filetage extérieur sur son côté extérieur.

2. Implant selon la revendication 1, **caractérisé en ce que** la première portion (1) est sensiblement cylindrique et la deuxième portion (3) est sensiblement conique.

3. Implant selon une des revendications 1 à 2, **caractérisé en ce que** le diamètre extérieur du corps de base à son extrémité cervicale correspond à 65 % à 85 % du diamètre extérieur à son extrémité coronaire.

4. Implant selon une des revendications 1 à 3, **caractérisé en ce que** la distance entre l'extrémité coronaire du corps de base et l'extrémité coronaire de la première portion (1) est comprise entre 4 mm et 7 mm.

5. Implant selon une des revendications 2 à 4, **caractérisé en ce que** l'angle de conicité (α) de la deuxième portion (3) est compris entre 25° et 50°.

6. Implant selon une des revendications 1 à 5, **caractérisé en ce que** le trou borgne (10) ménagé dans le corps de base présente un diamètre intérieur plus grand dans la zone de la troisième portion (5) que dans la première portion (1).

7. Implant selon la revendication 6, **caractérisé en ce que** le diamètre intérieur du trou borgne (10) dans la deuxième portion (3) se situe entre le diamètre intérieur du trou borgne pratiqué dans la troisième portion (5) du corps de base et celui de la première portion (1) du corps de base.
